# EUROPÄISCHE PATENTANMELDUNG

(11) **EP 3 831 498 A1**
(43) Veröffentlichungstag der Anmeldung: **09.06.2021**
(21) Anmeldenummer: 20208966.0
(22) Anmeldetag: 20.11.2020
(51) Int. Cl.: B05B 7/04, B05B 15/555, B05B 7/06, B05B 7/08, F28C 3/08, B33Y 10/00, B33Y 80/00

(54) **BÜNDELDÜSE ZUM VERSPRÜHEN EINES FLUIDS, ANORDNUNG MIT EINER BÜNDELDÜSE UND VERFAHREN ZUM HERSTELLEN EINER BÜNDELDÜSE**

(30) Priorität: 04.12.2019 DE 102019218892; 30.10.2020 DE 102020213695
(71) Anmelder: Lechler GmbH, 72555 Metzingen (DE)
(72) Erfinder: Zeeb, Thomas, 73257 Köngen (DE)
(74) Vertreter: Patentanwälte Ruff, Wilhelm, Beier, Dauster & Partner mbB

(57) **Zusammenfassung**

Die Erfindung betrifft eine Bündeldüse zum Versprühen eines Fluids mit einem Gehäuse und mehreren, um einen zentralen Bereich an einer Vorderseite des Gehäuses angeordneten Austrittsöffnungen für Einzelsprühstrahlen wenigstens einer Spülluftaustrittsöffnung für Spülluft, bei der die wenigstens eine Spülluftaustrittsöffnung und zumindest Abschnitte eines Zuführkanals für die Spülluft in dem einstückigen Gehäuse vorgesehen sind.

## Beschreibung

Die Erfindung betrifft eine Bündeldüse zum Versprühen eines Fluids mit einem Gehäuse und mehreren, um einen zentralen Bereich an einer Vorderseite des Gehäuses angeordneten Austrittsöffnungen für Einzelsprühstrahlen. Die Erfindung betrifft auch eine Anordnung mit einer Bündeldüse und ein Verfahren zum Herstellen einer Bündeldüse.

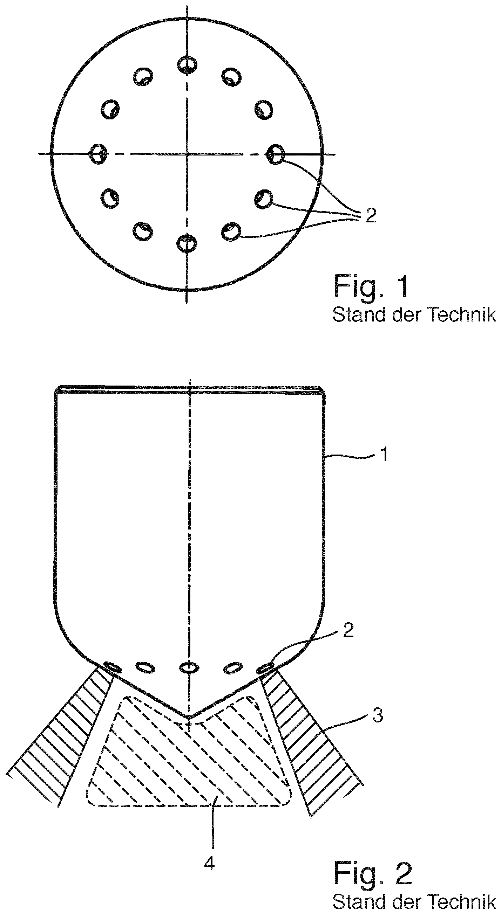

Bei konventionellen Bündeldüsen bilden sich durch verschiedene Effekte, wie Unterdruck längs schnell fließender Strömungen und Abkühlung der Oberfläche des Düsengehäuses durch relativ zur Umgebung kalten eingedüsten Medien an der Oberfläche des Düsengehäuses, Ablagerungen aus Partikeln. Am Beispiel von Verdunstungskühlern bei Zementwerken kann es zu Zementablagerungen an den Düsengehäusen kommen. Ein Beispiel für eine konventionelle Bündeldüse ist in den Fig. 1 und 2 dargestellt. Aus mehreren, ringförmig um einen zentralen Bereich herum angeordneten Austrittsöffnungen tritt jeweils ein Einzelsprühstrahl oder Sprüh aus Zerstäubungsgas und Fluidtropfen aus. Vor dem zentralen Bereich des Düsengehäuses 1 bildet sich ein Raum 4, in dem keine Einzelsprühstrahlen 3 vorhanden sind. In diesem Raum 4 kann sich unter bestimmten Bedingungen ein Unterdruck ausbilden. Der Unterdruck im Raum 4 kann dazu führen, dass sich in dem zentralen Bereich innerhalb des Rings der Austrittsöffnungen 2 Partikel ablagern. Diese Ablagerungen haften zunächst an dem zentralen Bereich der Vorderseite des Gehäuses 1 an und können dann so stark anwachsen, dass die Tropfen der Einzelsprühstrahlen 3 teilweise darauf treffen und an diesen Ablagerungen einen Wandfilm bilden, von dem schließlich Tropfen mit großem Durchmesser abtropfen. Diese großen Tropfen verdunsten aber innerhalb des Prozessraums nicht mehr vollständig, so dass es zu einer unvollständigen Verdunstung und letztendlich zu einer Schlammbildung im Prozessraum kommt.

Mit der Erfindung sollen eine Bündeldüse zum Versprühen eines Fluids, eine Anordnung und ein Verfahren zum Herstellen einer Bündeldüse verbessert werden.

Erfindungsgemäß ist hierzu eine Bündeldüse mit den Merkmalen von Anspruch 1, eine Anordnung mit den Merkmalen von Anspruch 14 beziehungsweise ein Verfahren mit den Merkmalen von Anspruch 15 vorgesehen.

Eine erfindungsgemäße Bündeldüse zum Versprühen eines Fluids weist ein einstückiges Gehäuse und mehrere, um einen zentralen Bereich an einer Vorderseite des Gehäuses angeordnete Austrittsöffnungen für Einzelsprühstrahlen sowie wenigstens eine Spülluftaustrittsöffnung für Spülluft auf, wobei die wenigstens eine Spülluftaustrittsöffnung und zumindest Abschnitte eines Zuführkanals für die Spülluft in dem einstückigen Gehäuse vorgesehen sind.

Dadurch wird eine sehr kompakte Bauweise erzielt. Indem Zuführkanäle und die Spülluftöffnungen im Gehäuse selbst angeordnet sind, besteht die Möglichkeit, die Spülluft genau an den Stellen austreten zu lassen, an denen Ablagerungen an der Außenseite des Gehäuses auftreten, können. Die Spülluft wird insbesondere mit Drücken bis zu 1bar betrieben und kann mit kostengünstigen Verdichtern, beispielsweise einem Seitenkanalgebläse, erzeugt werden. Das Abzweigen der Spülluft von der Zerstäubungsluft, gegebenenfalls mit einer Absenkung des Drucks, ist im Rahmen der Erfindung zwar ebenfalls möglich, die Spülluft ist vorteilhafterweise aber ein separat von der Zerstäubungsluft oder dem Zerstäubergas zugeführtes und separat geregeltes Medium.

In Weiterbildung der Erfindung ist wenigstens eine der Austrittsöffnungen von einer als Ringspalt ausgebildeten Spülluftaustrittsöffnung umgeben.

Auf diese Weise können Ablagerungen in dem, die Austrittsöffnungen unmittelbar umgebenden Bereich zuverlässig vermieden werden. Dadurch kann auch sichergestellt werden, dass eventuelle Ablagerungen nicht die Form der ausgegebenen Sprühstrahlen beeinflussen. Im Rahmen der Erfindung kann ein Volumenstrom und ein Druck der aus dem Ringspalt austretenden Spülluft so abgestimmt sein, dass ein Sprüh oder ein Sprühstrahl, das beziehungsweise der aus der vom Ringspalt umgebenen Austrittsöffnung austritt, durch die Spülluft beschleunigt wird und dadurch feinere Tropfen erzeugt werden. Mit der Spülluft oder Ringspaltluft werden die Tropfen der Mantelfläche des Sprühs beschleunigt und somit zerkleinert. Die mittlere Tropfengröße des Sprüh wird dadurch kleiner. Die Ringspaltluft verhindert auch, dass sich um die Austrittsöffnungen ein Wasserfilm oder Fluidfilm bildet. Dadurch werden Anbackungen verhindert.

In Weiterbildung der Erfindung ist jeder Spülluftaustrittsöffnung ein separater Zuführkanal für die Spülluft zugeordnet.

Auf diese Weise kann eine zuverlässige und konstante Versorgung jeder Spülluftaustrittsöffnung mit Spülluft sichergestellt werden.

In Weiterbildung der Erfindung ist jeder Zuführkanal zu einer Außenseite des Gehäuses geführt und/oder mit einem Ringkanal im Gehäuse verbunden.

Indem jeder Zuführkanal zu einer Außenseite des Gehäuses geführt ist, kann die Versorgung der einzelnen Zuführkanäle mit Spülluft in sehr einfacher Weise über einen Ringraum erfolgen, der einseitig durch einen Abschnitt der Außenseite des Gehäuses begrenzt ist. Selbstverständlich kann auch ein Ringkanal zur Versorgung der einzelnen Zuführkanäle mit Spülluft vorgesehen sein.

In Weiterbildung der Erfindung ist eine Kappe vorgesehen, die das Gehäuse abschnittsweise umgibt, wobei die Zuführkanäle an der Außenseite des Gehäuses in einem Zwischenraum zwischen der Kappe und dem Gehäuse münden oder der Ringkanal mit einem Zwischenraum zwischen der Kappe und dem Gehäuse in Strömungsverbindung steht.

Mittels einer Kappe, die die Außenseite des Gehäuses abschnittsweise umgibt, kann in konstruktiv sehr einfacher Weise ein Ringraum bereitgestellt werden, über den dann die Spülluft zugeführt wird.

In Weiterbildung der Erfindung ist innerhalb des zentralen Bereichs an der Vorderseite des Gehäuses die wenigstens eine Spülluftaustrittsöffnung für Spülluft vorgesehen.

Mittels der wenigstens einen Spülluftaustrittsöffnung im zentralen Bereich an der Vorderseite des Gehäuses kann der Raum zwischen den Einzelsprühstrahlen belüftet werden, ohne dass die Spülluft die Einzelsprühstrahlen kreuzen muss. Die Belüftung des Raums, der vor der Vorderseite des Gehäuses und innerhalb eines Bereichs liegt, der von den Einzelsprühstrahlen eingenommen wird, kann dadurch belüftet bzw. mit Spülluft beaufschlagt werden, ohne dass die Einzelsprühstrahlen beeinflusst werden. Dadurch wird zum einen ein unverändertes Sprühbild der Bündeldüse erzielt und zum anderen kann der zentrale Bereich an der Vorderseite des Gehäuses besser von Ablagerungen freigehalten werden.

In Weiterbildung der Erfindung sind die mehreren Austrittsöffnungen ringförmig angeordnet.

Dadurch bilden die aus den Austrittsöffnungen austretenden Einzelsprühstrahlen unmittelbar stromabwärts der Austrittsöffnungen ebenfalls einen Ring. Der Raum innerhalb dieses Rings aus Einzelsprühstrahlen kann dann bei der erfindungsgemäßen Bündeldüse mit Spülluft beaufschlagt werden, so dass Ablagerungen im zentralen Bereich an der Vorderseite des Gehäuses zuverlässig vermieden werden.

In Weiterbildung der Erfindung sind in dem zentralen Bereich mehrere Spülluftaustrittsöffnungen angeordnet.

Auf diese Weise kann der zentrale Bereich besser von Ablagerungen freigehalten werden.

In Weiterbildung der Erfindung sind die mehreren Spülluftaustrittsöffnungen ringförmig angeordnet.

Auch die aus den Spülluftaustrittsöffnungen austretende Spülluft überlagert sich stromabwärts der Spülluftaustrittsöffnungen und kann dadurch einen Gesamtsprühluftstrom bilden, der den Raum innerhalb der aus den Austrittsöffnungen austretenden Einzelsprühstrahlen vollständig einnimmt und dadurch zuverlässig Ablagerungen innerhalb des zentralen Bereichs an der Vorderseite des Gehäuses verhindert.

In Weiterbildung der Erfindung ist wenigstens eine Spülluftaustrittsöffnung in einer Seitenfläche oder Umfangsfläche des Gehäuses vorgesehen.

Mittels wenigstens einer Spülluftaustrittsöffnung in einer Seitenfläche oder Umfangsfläche des Gehäuses können auch Ablagerungen an der Seitenfläche oder Umfangsfläche des Gehäuses zuverlässig verhindert werden.

In Weiterbildung der Erfindung sind innerhalb des Gehäuses an den Austrittsöffnungen mündende Austrittskanäle und wenigstens ein an der Spülluftaustrittsöffnung mündender Spülluftkanal angeordnet, wobei der wenigstens eine Spülluftkanal innerhalb des Gehäuses zwischen zwei Austrittskanälen hindurch zu der Spülluftaustrittsöffnung führt.

In einer Projektion der Austrittskanäle und des wenigstens einen Spülluftkanals von der Seite her gesehen kreuzt also der Spülluftkanal die Austrittskanäle, mit anderen Worten wird der Spülluftkanal innerhalb des Gehäuses von einem radial außerhalb der Austrittskanäle liegenden Bereich in einen radial innerhalb der Austrittskanäle liegenden Bereich geführt. Die Spülluft kann dadurch in den zentralen Bereich an der Vorderseite des Gehäuses innerhalb der Austrittsöffnungen gelangen, ohne dass die aus den Austrittsöffnungen austretenden Einzelsprühstrahlen beeinflusst werden. Besonders vorteilhaft ist an einer solchen Ausbildung, dass in dem Gehäuse beispielsweise eine Mischkammer oder eine Zerstäubungskammer für zu zerstäubendes Fluid vorgesehen werden kann, da die Spülluftkanäle zwar innerhalb des Gehäuses, aber beispielsweise radial und axial außerhalb der Mischkammer oder Zerstäubungskammer geführt werden können. Die Spülluft bzw. die Spülluftkanäle beeinträchtigen dadurch nicht die Formgebung der Mischkammer, so dass über alle aus den Austrittsöffnungen austretenden Einzelsprühstrahlen ein gleichmäßiges Sprühbild mit der gewünschten Tropfengrößenverteilung erzielt werden kann. Die Spülluftkanäle werden hierzu in das Material des Gehäuses eingebracht, beispielsweise eingebohrt oder idealerweise während der Herstellung des Gehäuses mittels additiver Fertigung vorgesehen.

In Weiterbildung der Erfindung zweigt der wenigstens eine Spülluftkanal von einem innerhalb des Gehäuses angeordneten Kanal zur Zuführung von Zerstäubungsgas ab.

Auf diese Weise kann das Zerstäubungsgas auch für die Bereitstellung der Spülluft genutzt werden, so dass keine zusätzliche Spülluftversorgung bereitgestellt werden muss.

In Weiterbildung der Erfindung führt der wenigstens eine Spülluftkanal von einer Seitenfläche oder Umfangsfläche des Gehäuses zu der Spülluftaustrittsöffnung.

Eine solche Führung des Spülluftkanals ermöglicht es, an der Seitenfläche oder Umfangsfläche des Gehäuses eine separate Spülluftversorgung anzuschließen.

In Weiterbildung der Erfindung ist innerhalb des Gehäuses ein Ringkanal angeordnet, der wenigstens zwei Spülluftkanäle miteinander verbindet.

Durch Vorsehen eines Ringkanals können in den wenigstens zwei Spülluftkanälen gleichmäßige Druckverhältnisse geschaffen werden, so dass die Spülluft aus den mehreren Spülluftaustrittsöffnungen mit im Wesentlichen gleichem Druck und in gleicher Menge austritt.

In Weiterbildung der Erfindung ist der Ringkanal radial außerhalb der Austrittskanäle in dem Gehäuse angeordnet und wenigstens ein Spülluftkanal führt von dem Ringkanal zu einer Spülluftaustrittsöffnung innerhalb des zentralen Bereichs an der Vorderseite des Gehäuses.

In Weiterbildung der Erfindung sind Mittel zum Einstellen eines freien Querschnitts des Spülluftkanals vorgesehen.

Dadurch können Druck und Menge der austretenden Spülluft eingestellt werden. Zweckmäßigerweise wird Druck und Menge der austretenden Spülluft so eingestellt, dass Ablagerungen in dem zentralen Bereich an der Vorderseite des Gehäuses zuverlässig vermieden werden, dass aber auch gleichzeitig möglichst geringe Betriebskosten erreicht werden.

In Weiterbildung der Erfindung führt eine Stichbohrung von einer Seitenfläche oder Umfangsfläche des Gehäuses zu dem Spülluftkanal und ein Zapfen oder eine Schraube sind in der Stichbohrung angeordnet und ragen in den Spülluftkanal hinein.

Mittels eines Zapfens oder einer Schraube kann ein freier Querschnitt des Spülluftkanals in sehr einfacher Weise eingestellt werden.

Gemäß der Erfindung ist das Gehäuse einstückig ausgebildet.

Die Spülluftkanäle und Austrittskanäle verlaufen vorteilhaft innerhalb eines massiven Materialblocks, insbesondere Metallblocks, der das Gehäuse bildet. Dadurch wird ein konstruktiv einfacher Aufbau des Gehäuses erreicht und die Spülluft kann innerhalb des Gehäuses in den zentralen Bereich an der Vorderseite des Gehäuses geführt werden, ohne dass die aus den Austrittsöffnungen austretenden Einzelsprühstrahlen beeinflusst werden.

Gemäß der Erfindung ist auch eine Anordnung mit wenigstens einer erfindungsgemäßen Bündeldüse vorgesehen, bei der eine Spülluftversorgung zum Zuführen von Spülluft und zum Einstellen der Menge an zugeführter Spülluft vorgesehen ist, wobei die Spülluftversorgung in Strömungsverbindung mit dem Zuführkanal für Spülluft steht.

Mittels einer solchen Spülluftversorgung können die Menge an zugeführter Spülluft sowie beispielsweise auch die Austrittsgeschwindigkeit der Spülluft und weitere Parameter eingestellt werden. Dadurch kann auf Randbedingungen in der Prozessumgebung reagiert werden, in der die erfindungsgemäße Bündeldüse betrieben wird.

Vorteilhafterweise ist das Gehäuse mittels additiver Fertigung hergestellt.

Eine additive Fertigung, beispielsweise mittels 3D-Druck oder Laserschmelzverfahren (selective laser melting), allgemein auch Strahlschmelzverfahren, ermöglicht in vielen Fällen überhaupt erst die Herstellung des Gehäuses für die erfindungsgemäße Bündeldüse. Speziell können die Spülluftkanäle innerhalb des Gehäuses und innerhalb des Materialblocks, aus dem das Gehäuse besteht, im Wesentlichen beliebig angeordnet werden und beispielsweise kann ein Spülluftkanal zwischen zwei Austrittskanälen hindurch in den zentralen Bereich an der Vorderseite des Gehäuses geführt werden. Auch die Ausbildung eines Ringkanals, der mehrere Spülluftkanäle miteinander verbindet, ist mittels additiver Fertigung mit vernünftigem technischem Aufwand realisierbar.

In Weiterbildung der Erfindung ist die Bündeldüse als Zweistoffdüse ausgebildet und weist eine innerhalb des Gehäuses angeordnete Mischkammer auf, wobei ein Kanal zum Zuführen von Zerstäubungsgas und ein Kanal zum Zuführen von zu zerstäubendem Fluid in die Mischkammer münden.

Das der Erfindung zugrunde liegende Problem wird auch durch ein Verfahren zum Herstellen einer Bündeldüse gelöst, bei dem das schichtweise Aufbauen eines Gehäuses der Bündeldüse mittels additiver Fertigung vorgesehen ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang beschrieben oder gezeigt sind. In den Zeichnungen zeigen:
- Fig. 1: eine Vorderansicht einer konventionellen Sprühdüse gemäß dem Stand der Technik,
- Fig. 2: eine Seitenansicht der Sprühdüse der Fig. 1 gemäß dem Stand der Technik,
- Fig. 3: eine Vorderansicht einer erfindungsgemäßen Sprühdüse gemäß einer ersten Ausführungsform,
- Fig. 4: eine Ansicht auf die Schnittebene IV-IV in Fig. 3,
- Fig. 5: eine teilweise Schnittansicht eines Gehäuses einer erfindungsgemäßen Bündeldüse gemäß einer zweiten Ausführungsform,
- Fig. 6: eine teilweise Schnittansicht eines Gehäuses einer erfindungsgemäßen Bündeldüse gemäß einer dritten Ausführungsform,
- Fig. 7: eine Seitenansicht des Gehäuses der Fig. 6,
- Fig. 8: zeigt eine teilweise geschnitten Ansicht einer erfindungsgemäßen Bündeldüse gemäß einer vierten Ausführungsform,
- Fig. 9: eine vollständige Schnittansicht der erfindungsgemäßen Bündeldüse der Fig. 8, wobei der Verlauf der Schnittebenen so gewählt ist, dass diese auf beiden Seiten der Düse exakt mittig durch eine Austrittsöffnung hindurchlaufen,
- Fig. 10: zeigt eine Ansicht eines Gehäuses der Bündeldüse der Fig. 8 in einer Seitenansicht,
- Fig. 11: eine vergrößerte Einzelheit der Fig. 10,
- Fig. 12: eine Schnittansicht des Gehäuses entsprechend Fig. 9,
- Fig. 13: eine vergrößerte Einzelheit aus Fig. 12 und
- Fig. 14: eine Schnittansicht eines Gehäuses einer Bündeldüse gemäß einer weiteren Ausführungsform der Erfindung.

Die Fig. 1 und 2 zeigen bereits erläuterte Ansichten einer konventionellen Bündeldüse gemäß dem Stand der Technik. Wie bereits erläutert wurde, kann sich in einem zentralen Bereich an der Vorderseite des Gehäuses 1 innerhalb der ringförmig angeordneten Austrittsöffnungen 2 ein Unterdruck bilden, der dann letztendlich zu Ablagerungen in dem zentralen Bereich an der Vorderseite des Gehäuses führt. Solche Ablagerungen können, wenn sie ein gewisses Ausmaß erreichen, das Sprühbild der Bündeldüse beeinflussen. Speziell lagert sich Flüssigkeit aus den Einzelsprühstrahlen 3 an den Ablagerungen an und tropft dann in Form großer Tropfen ab. Solche großen Tropfen verdunsten innerhalb des Prozessraums nicht mehr vollständig und führen letztendlich zu einer Verschlammung des Prozessraums. Nehmen die Ablagerungen ein großes Ausmaß an, können die Austrittsöffnungen 2 direkt beeinflusst und gegebenenfalls sogar zumindest teilweise verstopft werden.

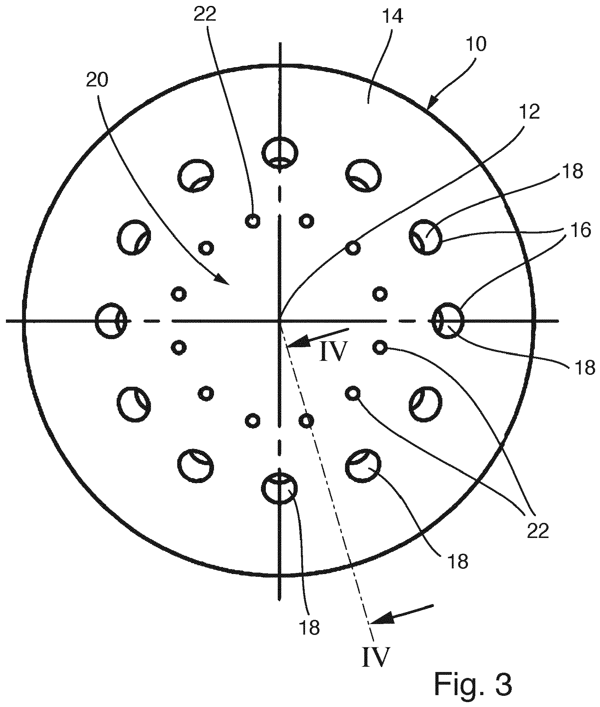

In der Darstellung der Fig. 3 ist eine erfindungsgemäße Bündeldüse 10 gemäß einer ersten Ausführungsform der Erfindung in einer Vorderansicht dargestellt. Der Blick geht in Fig. 3 parallel zu einer Mittellängsachse 12 des Gehäuses 14 auf die Vorderseite des Gehäuses 14. An der Vorderseite des Gehäuses sind insgesamt zwölf Austrittsöffnungen 16 ringförmig und gleichmäßig voneinander beabstandet angeordnet. Die Mittelpunkte der jeweils kreisförmigen Austrittsöffnungen 16 liegen auf einer gedachten gemeinsamen Kreislinie um die Mittellängsachse 12. Zu den Austrittsöffnungen 16 führen jeweils Austrittskanäle 18, die mit der Mittellängsachse 12 jeweils den gleichen Winkel einschließen, beispielsweise einen Winkel zwischen 20° und 45°. Aus den Austrittsöffnungen 16 austretende Einzelsprühstrahlen treten dadurch zur Mittellängsachse 12 nach außen geneigt aus, ähnlich den in Fig. 2 dargestellten Einzelsprühstrahlen 3.

Um die Entstehung eines Unterdrucks innerhalb eines zentralen Bereichs 20 an der Vorderseite des Gehäuses 14 zu vermeiden, wobei dieser zentrale Bereich innerhalb des durch die Austrittsöffnungen 16 gebildeten Rings liegt, sind innerhalb des zentralen Bereichs mehrere Spülluftaustrittsöffnungen 22 vorgesehen. Insgesamt weist das Gehäuse 14 der Bündeldüse 10 zwölf Spülluftaustrittsöffnungen 22 auf, die ringförmig angeordnet sind. Die Mittelpunkte der Spülluftaustrittsöffnungen 22 liegen auf einer gedachten Kreislinie, die konzentrisch zur Mittellängsachse 12 des Gehäuses 14 verläuft und die auch konzentrisch zu der gedachten Kreislinie ist, auf der die Mittelpunkte der Austrittsöffnungen 16 liegen.

Im Rahmen der Erfindung kann auch lediglich eine einzige Spülluftaustrittsöffnung 22 in dem zentralen Bereich angeordnet sein und die Spülluftaustrittsöffnungen können im Wesentlichen in beliebiger Anordnung innerhalb des zentralen Bereichs 20 verteilt sein. Wesentlich ist, dass in einem Bereich, der in Ausströmrichtung gesehen vor dem zentralen Bereich 20 an der Vorderseite des Gehäuses 14 liegt, also in dem Raum 4, wie er in Fig. 2 dargestellt ist, die Entstehung eines Unterdrucks vermieden wird und dadurch Ablagerungen in dem zentralen Bereich 20 vermieden werden können.

Dies wird durch das Belüften des in Fig. 2 dargestellten Raums 4 mittels Spülluft aus den Spülluftaustrittsöffnungen 22 erreicht. Druck und Menge der aus den Spülluftaustrittsöffnungen 22 austretenden Spülluft werden dabei so eingestellt, dass Ablagerungen zuverlässig vermieden werden, gleichzeitig aber auch die Betriebskosten gering gehalten werden.

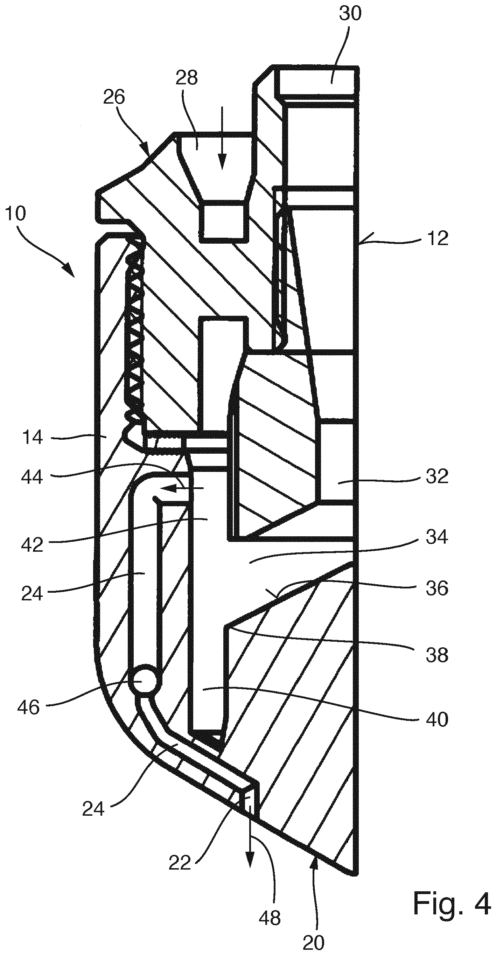

Fig. 4 zeigt eine Ansicht auf die Schnittebene IV-IV in Fig. 3. Die Schnittebene IV-IV verläuft, siehe Fig. 3, zwischen zwei Austrittskanälen 18 hindurch, so dass die Austrittskanäle 18 in der Schnittansicht der Fig. 4 nicht erkennbar sind. Die Schnittebene IV-IV verläuft aber durch eine der Spülluftaustrittsöffnungen 22 und durch einen Spülluftaustrittskanal 24, über den der Spülluftaustrittsöffnung 22 Spülluft zugeführt wird.

Das Gehäuse 14 der erfindungsgemäßen Bündeldüse 10 ist mit einem Einsatz 26 versehen, der von der Rückseite des Gehäuses 14 her in dieses eingeschraubt wird. An dem Einsatz 26 ist ein Anschluss 28 für Zerstäubungsgas vorgesehen sowie ein Anschluss 30 für zu versprühendes Fluid. Das zu zerstäubende Fluid 30 wird konzentrisch zur Mittellängsachse 12 des Gehäuses zugeführt und gelangt über eine Eintrittsdüse 32 in eine Mischkammer 34 im Gehäuse. Die Mischkammer 34 weist einen gegenüber der Eintrittsdüse 32 angeordneten Verteilkegel 36 auf. Der Verteilkegel 36 ist konzentrisch zur Mittellängsachse 12 angeordnet. Das aus der Eintrittsdüse 32 austretende, zu versprühende Fluid trifft auf den Verteilkegel 36 auf, dessen Spitze der Eintrittsdüse 32 entgegengerichtet ist. Das zu versprühende Fluid bildet auf dem Verteilkegel 36 einen über den Verteilkegel 36 radial nach außen strömenden Fluidfilm. An einer Umlaufkante 38 des Verteilkegels 36 verlässt das Fluid die Oberfläche des Verteilkegels 36 und tritt in einen ringförmigen Abschnitt 40 der Mischkammer 34 ein, an dessen Grund die Austrittskanäle 18 beginnen, die dann zu den Austrittsöffnungen 16 führen. Das über den Anschluss 28 zugeführte Zerstäubungsgas wird in einen Ringkanal 42 geleitet, der im Wesentlichen fluchtend zu dem ringförmigen Abschnitt 40 der Mischkammer 34 angeordnet ist, und trifft in Form eines Ringstrahls auf das Fluid, das die Umfangskante 38 des Verteilkegels 36 verlässt. Im ringförmigen Abschnitt 40 vermischen sich infolgedessen das Zerstäubungsgas und das zu versprühende Fluid zu einer Mischung aus Tropfen des zu versprühenden Fluids und Zerstäubungsgas. Diese Mischung tritt dann in die Austrittskanäle 18 ein und letztendlich als Einzelsprühstrahlen aus den Austrittsöffnungen 16 aus.

Aus dem Ringkanal 42, über den das Zerstäubungsgas zugeführt wird, zweigt der Spülluftkanal 24 ab. Gemäß einem Pfeil 44 tritt somit unter Überdruck stehendes Zerstäubungsgas in den Spülluftkanal 24 ein. Der Spülluftkanal 24 führt zunächst radial nach außen von dem Ringkanal 42 weg, weist dann aber eine 90°-Biegung auf und verläuft parallel zur Mittellängsachse 12 bis zu einem Ringkanal 46. Der Ringkanal 46 bildet einen innerhalb des Materialblocks des Gehäuses 14 angeordneten umlaufenden Ring, der konzentrisch zur Mittellängsachse 12 angeordnet ist. Der Ringkanal 46 verläuft radial außerhalb des ringförmigen Abschnitts 40 der Mischkammer 34 und somit auch in einem Bereich, der radial außerhalb der Austrittskanäle 18 und der Austrittsöffnungen 16 liegt, vgl. Fig. 3. Mittels des Ringkanals 46 wird die Spülluft aus dem Spülluftkanal 24 gleichmäßig verteilt. Von dem Ringkanal 46 zweigen mehrere Spülluftkanäle 24 ab, wobei in der Darstellung der Fig. 4 lediglich ein Spülluftkanal 24 zu erkennen ist. Gemäß Fig. 3 sind insgesamt zwölf Spülluftaustrittsöffnungen 22 vorgesehen, zu denen jeweils ein Spülluftkanal 24 führt. Von dem Ringkanal 46 gehen somit insgesamt zwölf Spülluftkanäle 24 aus, die jeweils zu einer Spülluftaustrittsöffnung 22 führen.

In der Darstellung der Fig. 4 ist zu erkennen, dass die von dem Ringkanal 46 ausgehenden Spülluftkanäle 24 jeweils kurz hinter der Vorderseite des Gehäuses 14 parallel zu der Vorderseite geführt werden, dann scharf abknicken, so dass Spülluft gemäß einem Pfeil 48 aus der jeweiligen Spülluftöffnung 22 austreten kann. In seinem letzten Abschnitt unmittelbar stromaufwärts der Spülluftaustrittsöffnungen 22 verlaufen die Spülluftkanäle 24 parallel zur Mittellängsachse 12. Die Spülluft tritt gemäß dem Pfeil 48 somit parallel zur Mittellängsachse 12 aus der Spülluftaustrittsöffnung 22 aus. Im Rahmen der Erfindung kann ein Winkel, unter dem die Spülluft aus den Spülluftaustrittsöffnungen 22 austritt, variiert werden.

Durch die gemäß dem Pfeil 48 austretende Spülluft kann der zentrale Bereich 20 an der Vorderseite des Gehäuses 14 belüftet werden und Ablagerungen in dem zentralen Bereich 20 werden dadurch zuverlässig vermieden.

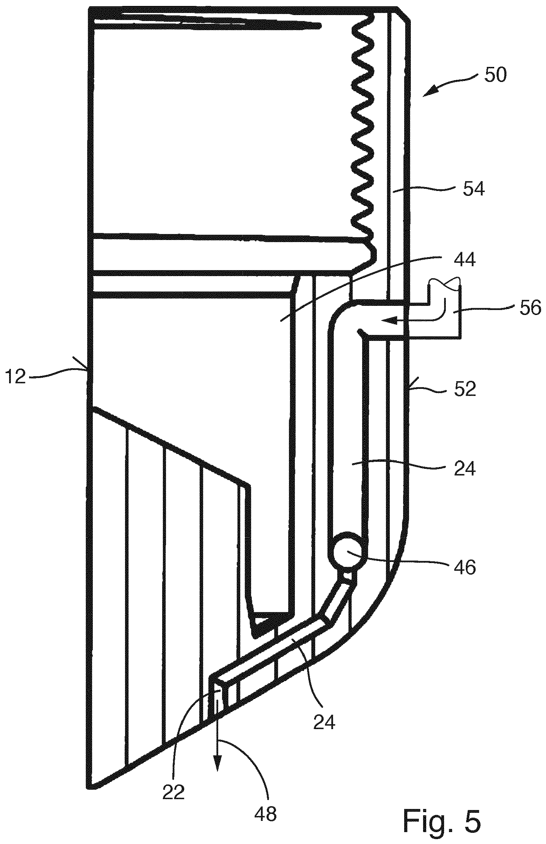

Die Darstellung der Fig. 5 zeigt eine teilweise Schnittansicht einer erfindungsgemäßen Bündeldüse 50 gemäß einer weiteren Ausführungsform der Erfindung. Die Bündeldüse 50 ist lediglich teilweise dargestellt und speziell ist der Einsatz 26 der Bündeldüse 10 der Fig. 4 nicht erneut dargestellt. Der Einsatz 26 ist bei der Bündeldüse 50 aber identisch ausgeführt und wird daher nicht dargestellt und nicht erneut erläutert.

Im Unterschied zur Bündeldüse 10 der Fig. 4 weist die Bündeldüse 50 der Fig. 5 ein Gehäuse 54 auf, bei dem die Spülluft nicht aus dem Ringkanal 44 abgezweigt wird, über den das Zerstäubungsgas zugeführt wird, sondern der Spülluftkanal 24 endet an einer Umfangsfläche 52 des Gehäuses 50. Der Spülluftkanal 24 führt dann zunächst radial nach innen, dann parallel zur Mittellängsachse 12 zu dem Ringkanal 46, um dann, wie bereits anhand der Fig. 4 erläutert wurde, an der Spülluftaustrittsöffnung 22 zu enden, aus der dann Spülluft gemäß dem Pfeil 48 austritt.

In den Spülluftkanal 24 kann somit entweder Spülluft aus der Umgebung des Gehäuses 54 angesaugt werden. Dies ist möglich, da, wie anhand der Fig. 2 erläutert wurde, innerhalb des Raums 4 zwischen den Einzelsprühstrahlen 3 im Sprühbetrieb ein Unterdruck herrscht. Im Rahmen der Erfindung kann der Spülluftkanal 24 aber auch mittels einer in Fig. 5 lediglich abschnittsweise angedeuteten Spülluftzuführung 56 gespeist werden, über die Spülluft mit dem gewünschten Druck und in der gewünschten Menge zugeführt wird.

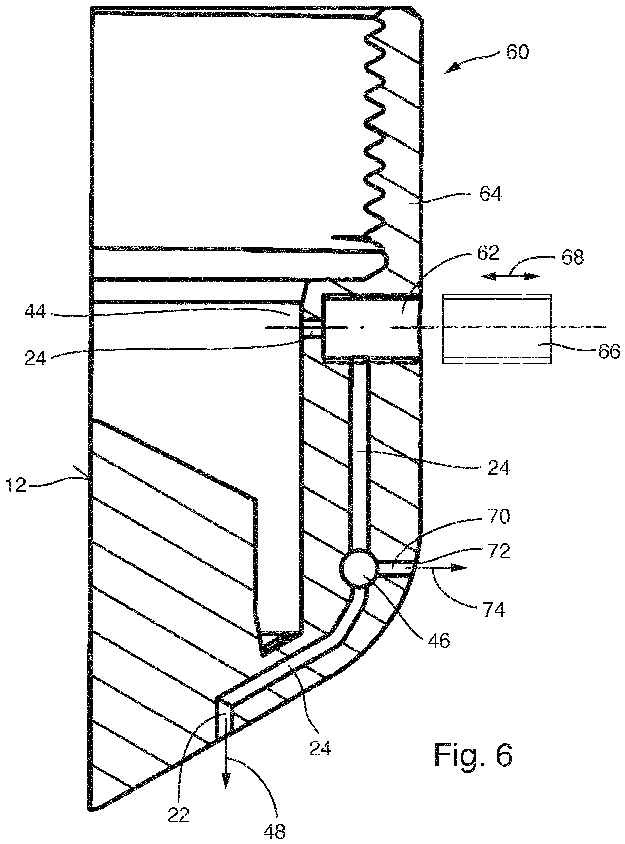

Die Darstellung der Fig. 6 zeigt eine teilweise Schnittansicht einer Bündeldüse 60 gemäß einer weiteren Ausführungsform der Erfindung. Ein Einsatz 26 des Gehäuses 64 der Bündeldüse 60 ist in Fig. 6 nicht dargestellt, ist aber identisch zu dem Einsatz 26 aufgebaut, der bereits im Zusammenhang mit der Bündeldüse 10 der Fig. 4 erläutert wurde.

Wie bei der Bündeldüse 10 der Fig. 4 wird Spülluft aus dem Ringkanal 44 abgezweigt, über den das Zerstäubungsgas zugeführt wird. Die aus dem Zerstäubungsgas abgezweigte Spülluft wird dann über den Spülluftkanal 24 zu dem Ringkanal 46 und über den zweiten Abschnitt des Spülluftkanals 24 stromabwärts des Ringkanals 46 zu jeweils einer Austrittsöffnung 22 geführt, aus der dann Spülluft gemäß dem Pfeil 48 austritt.

Um Menge und Druck der Spülluft in dem ersten Abschnitt des Spülluftkanals 24 sowie auch stromabwärts hiervon beeinflussen zu können, ist eine Bohrung 62 vorgesehen, die sich ausgehend von einer Umfangsfläche des Gehäuses 64 in dieses hineinerstreckt. Die Bohrung ist als Sacklochbohrung ausgebildet und schneidet den ersten Abschnitt des Spülluftkanals 24 sowie den Abschnitt des Spülluftkanals 24, der von dem Ringkanal 44 ausgeht. Der von dem Ringkanal 44 ausgehende Abschnitt des Spülluftkanals 24 und der sich parallel zur Mittellängsachse 12 erstreckende Abschnitt des Spülluftkanals 24 münden somit in die Sacklochbohrung 62. In die Sacklochbohrung 62 kann eine Madenschraube 66 mehr oder weniger weit eingeschraubt werden, was mittels eines Doppelpfeils 68 angedeutet ist. Mittels der Madenschraube 66 kann somit der freie Querschnitt des ersten Abschnitts des Spülluftkanals 24 eingestellt werden. Dadurch können Druck und Menge der Spülluft in dem ersten Abschnitt des Spülluftkanals 24 sowie stromabwärts hiervon eingestellt werden. Speziell wenn in dem Ringkanal 44 Zerstäubungsgas mit sehr hohem Druck zugeführt wird, ist die Bündeldüse 60 vorteilhaft, da lediglich ein kleiner Teil des Zerstäubungsgases durch den Spülluftkanal 24 abgeführt wird.

Von dem Ringkanal 46 gehen nicht nur die zweiten Abschnitte der Spülluftkanäle 24 aus, die dann an den Spülluftaustrittsöffnungen 22 enden. Darüber hinaus gehen von dem Ringkanal 46 zweite Spülluftkanäle 70 aus, die sich in radialer Richtung erstrecken und zu zweiten Spülluftaustrittsöffnungen 72 in der Umfangsfläche des Gehäuses 64 führen. Es sind mehrere zweite Spülluftkanäle 70 und mehrere zweite Spülluftaustrittsöffnungen 72 vorgesehen, aus denen Spülluft dann gemäß einem Pfeil 74 in radialer Richtung zur Mittellängsachse 12 des Gehäuses 64 austritt. Durch die gemäß dem Pfeil 74 austretende Spülluft können auch Ablagerungen an der Umfangsfläche oder Seitenfläche des Gehäuses 64 vermieden werden.

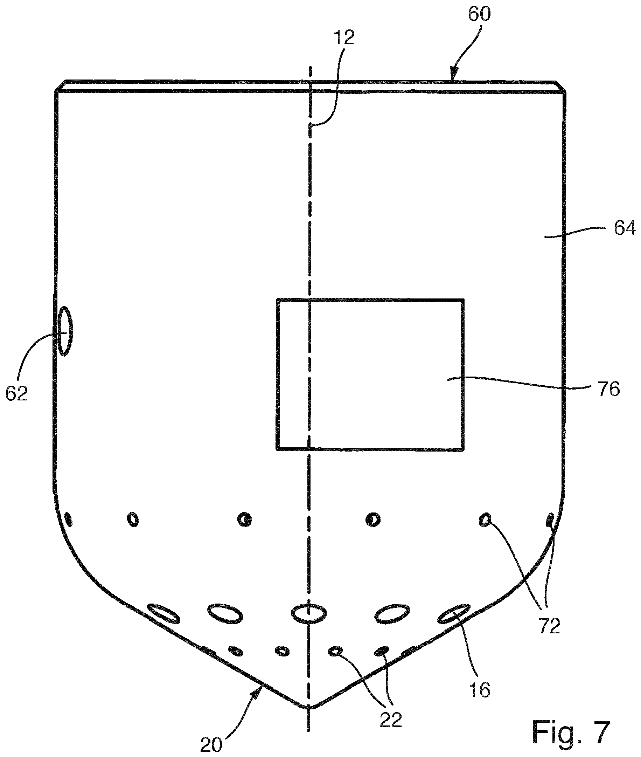

Fig. 7 zeigt eine Seitenansicht der Bündeldüse 60 der Fig. 6. Zu erkennen ist ein Teil der Austrittsöffnungen 16, die ringförmig um die Mittellängsachse 12 an der Vorderseite des Gehäuses 64 angeordnet sind und aus denen dann jeweils Einzelsprühstrahlen austreten. Jeder Einzelsprühstrahl besteht aus einem Gemisch aus Tropfen und Zerstäubungsgas. Ebenfalls zu erkennen sind die mehreren Spülluftaustrittsöffnungen 22, die innerhalb des zentralen Bereichs 20 an der Vorderseite des Gehäuses 64 ringförmig angeordnet sind.

Darüber hinaus sind einige der an der Umfangsfläche des Gehäuses 64 angeordneten zweiten Spülluftaustrittsöffnungen 72 zu erkennen, die gleichmäßig beabstandet entlang einer gedachten Kreislinie über den Umfang des Gehäuses 64 verteilt sind. In der Umfangsfläche des Gehäuses 64 ist auch der Beginn der Sacklochbohrung 62 zu erkennen, vgl. Fig. 6. Die Madenschraube 66 ist in Fig. 7 nicht dargestellt.

Das Gehäuse 64 weist eine Antriebsausbildung 76 in Form einer abgeplatteten Fläche sowie einer, in Fig. 7 nicht erkennbaren gegenüberliegenden abgeplatteten Fläche auf. Die Antriebsausbildung 76 dient zum Angreifen mit einem Gabelschlüssel, um das Gehäuse 64 beim Einschrauben des Einsatzes 28 festzuhalten, der dann beispielsweise wiederum mit zwei konzentrischen Rohrleitungen zum Zuführen von zu verstäubendem Fluid und Zerstäubungsgas verbunden ist.

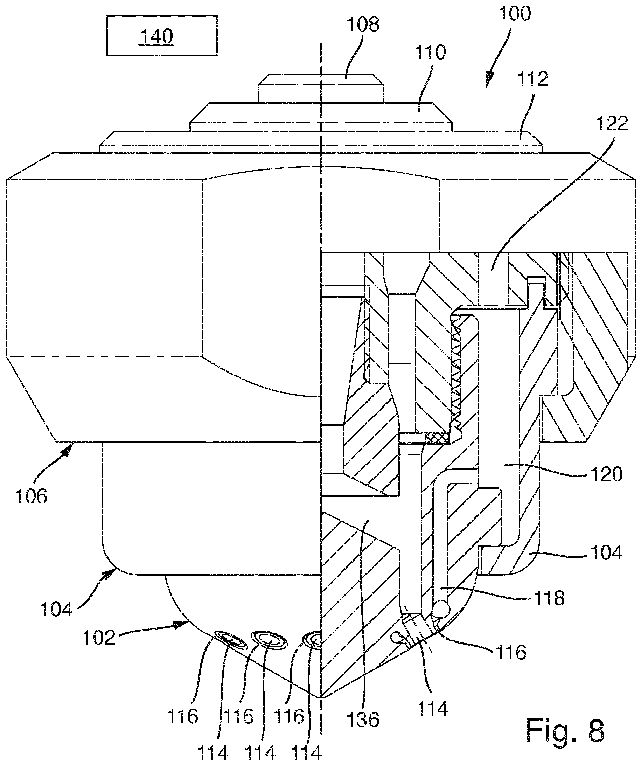

Die Darstellung der Fig. 8 zeigt eine teilweise geschnittene Ansicht einer erfindungsgemäßen Bündeldüse gemäß einer weiteren Ausführungsform der Erfindung. Die Bündeldüse 100 weist ein Gehäuse 102, eine Kappe 104 und eine Überwurfmutter 106 auf. Mittels der Überwurfmutter 106 werden das Gehäuse 102 und die Kappe 104 an einer nicht dargestellten Rohrleitung befestigt. Die Rohrleitung weist dabei drei koaxial zueinander angeordnete Einzelrohre auf. Mit einem mittleren Rohr wird zu versprühende Flüssigkeit einem Flüssigkeitseinlass 108 zugeführt. Ein Ringraum zwischen dem mittleren Rohr und dem in radialer Richtung darauffolgenden Rohr dient zur Zuführung von Zerstäubungsluft zu einem Zerstäubungsluftanschluss 110. Ein zweiter Ringraum zwischen dem mittleren Rohr und dem äußeren Rohr dient zur Zuführung von Spülluft zu einem Spülluftanschluss 112. Die Spülluft wird bezüglich Menge und Druck mittels einer Spülluftversorgung 140 bereitgestellt und geregelt und in nicht dargestellter Weise dem Spülluftanschluss 112 zugeführt.

Im Rahmen der Erfindung können zu zerstäubende Flüssigkeit, Zerstäubungsluft und Spülluft selbstverständlich auch in anderer Weise zugeführt werden, beispielsweise über nicht koaxiale Rohrleitungen.

Die Bündeldüse 100 kann beispielsweise am Ende einer sogenannten Sprühlanze angeordnet sein, in der die Leitungen zum Zuführen von Fluid, Zerstäubungsluft und Spülluft angeordnet sind und die in einen Prozessraum hineinragt.

Die zu zerstäubende Flüssigkeit wird in gleicher Weise wie bei der anhand der Fig. 1 bis 7 erläuterten Bündeldüsen mittels Zerstäubungsgas in einer Mischkammer 136 zerstäubt und mehreren Austrittsöffnungen 114 zugeführt. Aus jeder der Austrittsöffnungen 114 tritt dadurch ein Sprühstrahl aus.

Im Unterschied zu den Bündeldüsen der Fig. 1 bis 7 ist bei der Bündeldüse 100 jede Austrittsöffnung 114 von einer als Ringspalt ausgebildeten Spülluftaustrittsöffnung 116 umgeben. Jede der als Ringspalt ausgebildeten Spülluftaustrittsöffnungen 116 ist dabei konzentrisch zur zugeordneten Austrittsöffnung 114 angeordnet. Die insgesamt zehn Austrittsöffnungen 114 sind dabei ringförmig auf einer Vorderseite des Gehäuses 102 angeordnet. Wie ausgeführt, wird jede der Austrittsöffnungen 114 von einer zugeordneten und als Ringspalt ausgebildeten Spülluftaustrittsöffnung 116 umgeben.

Im Rahmen der Erfindung können neben den Spülluftaustrittsöffnungen 116 noch weitere Austrittsöffnungen für Spülluft an der Außenseite des Gehäuses vorgesehen sein, beispielsweise auch in dem zentralen Bereich an der Vorderseite des Gehäuses, den die ringförmig angeordneten Austrittsöffnungen 114 und Spülluftaustrittsöffnungen 116 umgeben. Weitere Spülluftaustrittsöffnungen können beispielsweise auch an der Außenseite des Gehäuses 112 zwischen der in Fig. 8 unteren Begrenzung der Kappe 104 und den Spülluftaustrittsöffnungen 116 vorgesehen sein.

Durch die als Ringspalt ausgebildeten Spülluftaustrittsöffnungen 116 ist jede Austrittsöffnung 114 im Betrieb der Bündeldüse 100 von einem Ring aus Spülluft umgeben. In dem die Austrittsöffnung 114 unmittelbar umgebenden Bereich werden dadurch Ablagerungen zuverlässig vermieden. Dadurch wird auch vermieden, dass bei längerem Betrieb der Bündeldüse 100 Ablagerungen die aus den Austrittsöffnungen 114 austretenden Einzelsprühstrahlen negativ beeinflussen. Die Tropfen in der Mantelfläche der Sprühstrahlen oder des Sprühs werden durch die Spülluft aus dem Ringspalt beschleunigt und dadurch geteilt. Die mittlere Tropfengröße im Sprüh sinkt dadurch.

Jede der Spülluftaustrittsöffnungen 114 ist mit einem innerhalb des einstückigen Gehäuses 102 verlaufenden Zuführkanals 118 mit einem Ringraum 120 zwischen der Kappe 104 und der Außenfläche des Gehäuses 102 verbunden. Dieser Ringraum 120 wird wiederum über einen Zuführkanal 122 von dem Spülluftanschluss 112 und der Spülluftversorgung 140 mit Spülluft versorgt. Über den Ringraum 120 kann dadurch jeder Zuführkanal 118 mit Spülluft versorgt werden.

Dadurch, dass die Zuführkanäle 118 innerhalb des einstückigen Gehäuses 102 verlaufen, wird eine äußerst kompakte und konstruktiv einfache Anordnung geschaffen. Auch die als Ringspalt ausgebildeten Spülluftöffnungen 116 sind in dem einstückigen Gehäuse 102 vorgesehen. Mittels spanender Bearbeitung kann das Gehäuse 102 nicht hergestellt werden. Das Gehäuse 102 wird mittels additiver Verfahren hergestellt. Beim schichtweisen Aufbau des Gehäuses 102 werden dabei die als Ringspalt ausgebildeten Spülluftöffnungen 116 sowie die Zuführkanäle 118 mit ausgebildet.

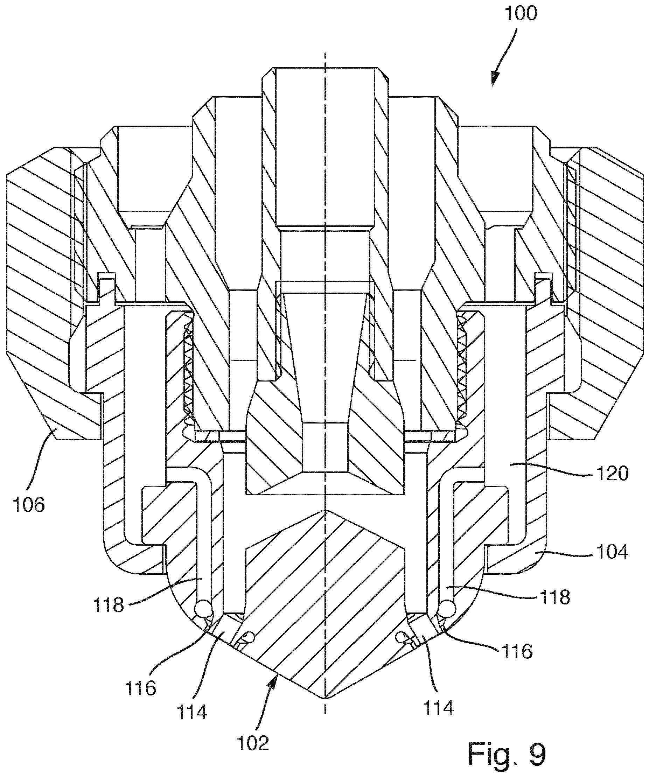

Die Darstellung der Fig. 9 zeigt eine weitere Schnittansicht der Bündeldüse 100 der Fig. 8. Die Schnittebenen auf der rechten und linken Seite der Fig. 9 liegen dabei aber nicht in einer Ebene. Vielmehr sind die Schnittebenen links und rechts der Mittellinie so gewählt, dass die Schnittfläche links und die Schnittfläche rechts der Mittellängsachse genau mittig durch eine Austrittsöffnung 114 laufen.

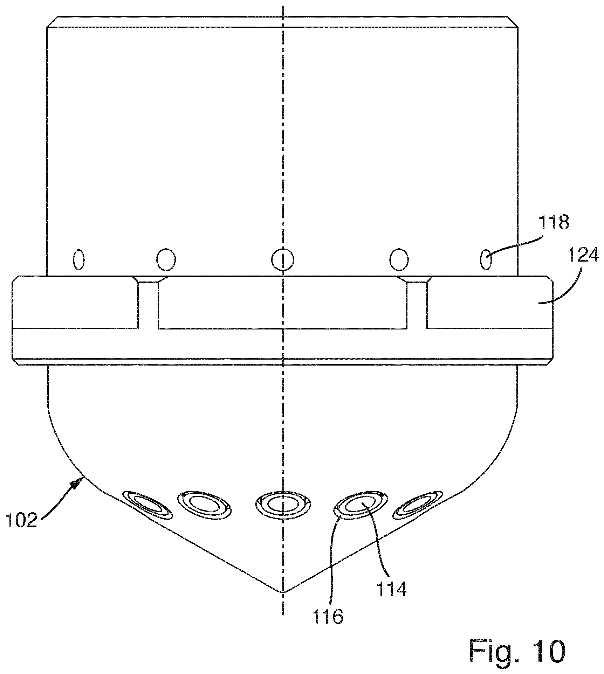

Fig. 10 zeigt eine Seitenansicht des Gehäuses 102. Zu erkennen sind in dieser Ansicht insgesamt fünf Austrittsöffnungen 114, jeweils mit einer als Ringspalt ausgebildeten und die Austrittsöffnung 114 umgebenden Spülluftaustrittsöffnung 116, sowie ein Befestigungsring 124, der auf seiner Innenseite mit einem Innengewinde und auf seiner Außenseite mit Abflachungen versehen ist, um das Gehäuse 102 an einem Befestigungsflansch anordnen zu können.

Weiter sind in Fig. 10 auch die Mündungsöffnungen der Zuführkanäle 118 zu erkennen. Diese Zuführkanäle 118 enden an einer Außenseite des Gehäuses, um dann, siehe Fig. 8 und Fig. 9, in den Ringraum 120 zu münden.

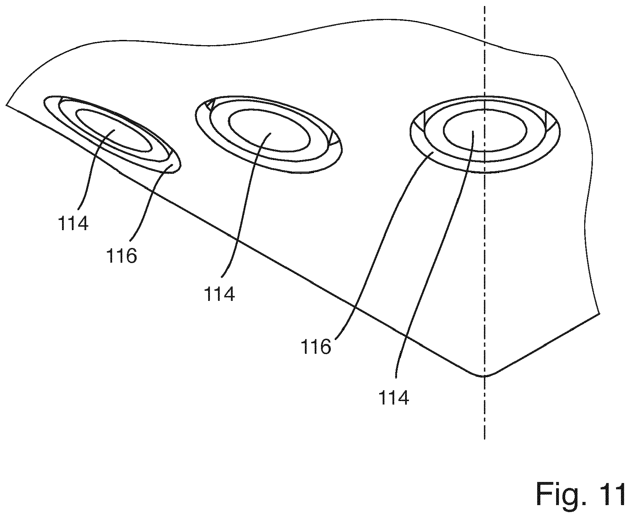

Die Darstellung der Fig. 11 zeigt eine vergrößerte Einzelheit der Fig. 10. Dargestellt sind lediglich drei Austrittsöffnungen 114, jeweils umgeben von einer Spülluftaustrittsöffnung 116.

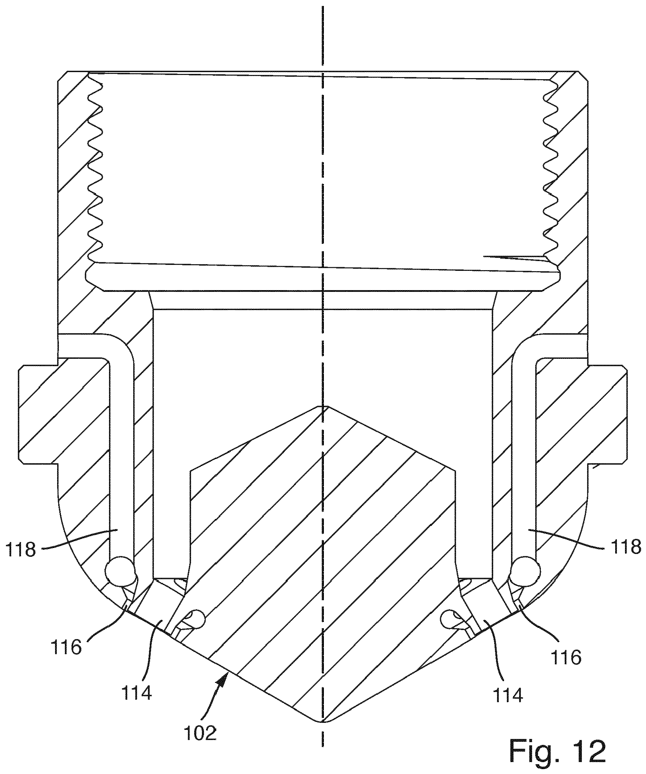

Fig. 12 zeigt eine Schnittansicht des Gehäuses 102.

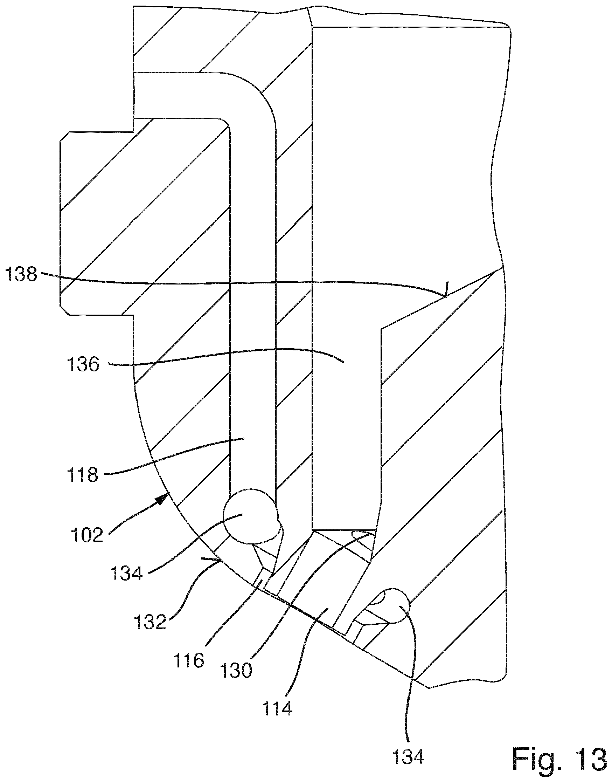

Fig. 13 zeigt eine vergrößerte Einzelheit der Schnittansicht der Fig. 12. Neben einer ersten Austrittsöffnung 114 ist abschnittsweise der Beginn eines Kanals 130 zu erkennen, der zu einer weiteren Austrittsöffnung 114 führt. Darüber hinaus ist gut zu erkennen, dass die Spülluftaustrittsöffnung 116 in dem sich unmittelbar an die Außenseite 132 des Gehäuses 102 anschließenden Bereich die Form eines Ringspalts mit zueinander parallelen Seitenwänden hat. Stromaufwärts dieses eigentlichen Ringspaltbereichs weitet sich der Ringraum auf, um dann in einen Ringkanal 134 überzugehen, der dann wiederum mit dem Zuführkanal 118 in Strömungsverbindung steht. Ein Querschnitt dieses Ringkanals 134, der ebenfalls die Austrittsöffnung 114 umgibt, ist aber nicht konstant. Im Mündungsbereich des Zuführkanals 118 ist der Querschnitt dieses Ringkanals 134 am größten. Gegenüberliegend dem Mündungsbereich des Zuführkanals 118, letztendlich also bei 180° des Umfangs des Ringkanals 134, ist der Querschnitt des Ringkanals 134 hingegen am kleinsten. Dadurch kann eine gleichmäßige Versorgung der Spülluftaustrittsöffnung 116 mit Spülluft sichergestellt werden. Dadurch wird erreicht, dass über den gesamten Umfang der Spülluftaustrittsöffnung 116 die gleiche Menge an Spülluft austritt.

Anhand der Darstellung der Fig. 13 ist gut zu erkennen, dass das Gehäuse 102 nicht spanend, sondern zumindest im Bereich des Zuführkanals 118, des Ringkanals 134 sowie der Spülluftaustrittsöffnung 116 durch additive Verfahren herstellbar ist.

Beispielsweise könnte ein Rohling des Gehäuses 102 mittels additiver Verfahren hergestellt werden und dieser Rohling enthält dann bereits die Zuführkanäle 118, die Ringkanäle 134 und die Spülluftaustrittsöffnungen 116. Die Austrittsöffnungen 114 sowie die stromaufwärts der Austrittsöffnungen 114 angeordnete ringförmige Mischkammer 136 und die kegelförmige Aufprallfläche 138 für eintretendes Fluid können hingegen in konventioneller Weise spanend hergestellt werden. Im Rahmen der Erfindung kann selbstverständlich auch das vollständige Gehäuse 102 mittels additiver Verfahren hergestellt werden.

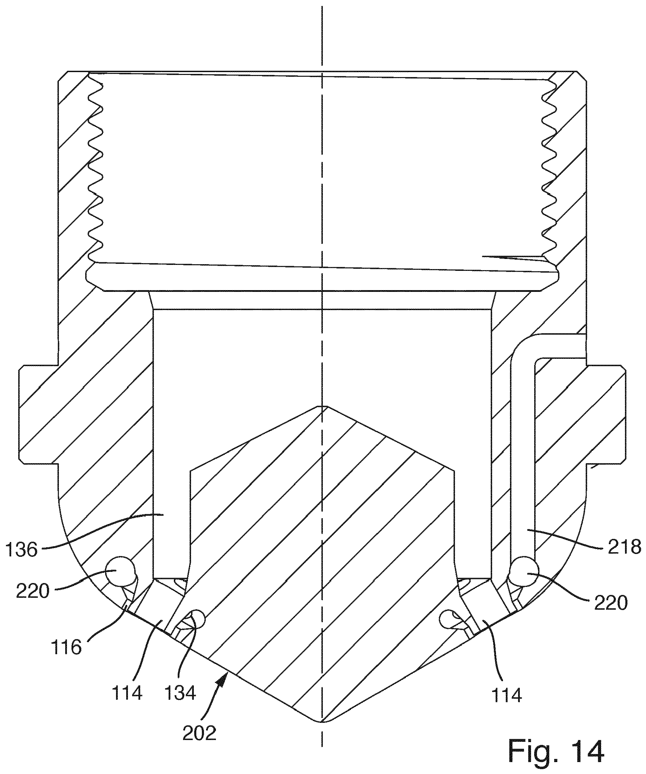

Fig. 14 zeigt eine Schnittansicht eines Gehäuses 202 gemäß einer weiteren Ausführungsform der Erfindung. Das Gehäuse 202 kann bei der in Fig. 8 und Fig. 9 dargestellten Bündeldüse 100 anstelle des Gehäuses 102 verwendet werden.

Das Gehäuse 202 ist sehr ähnlich zu dem Gehäuse 102 aufgebaut, so dass lediglich die Unterschiede zu dem Gehäuse 102 erläutert werden.

Bei dem Gehäuse 102 ist jeder Ringkanal 134 mit einem separaten Zuführkanal 118 verbunden. Jeder Zuführkanal 118 führt dann, siehe Fig. 8 und Fig. 9, in den Ringraum 120 zwischen dem Gehäuse 102 und der Kappe 104.

Im Unterschied hierzu weist das Gehäuse 202 lediglich einen einzigen Zuführkanal 218 auf, der ebenfalls in den Ringraum 120 mündet. Der Zuführkanal 218 ist aber mit einem Ringkanal 220 verbunden, der um 360° umläuft. Der Ringkanal 220 läuft somit radial außerhalb des Ringraums 136 in der Wand des Gehäuses 202 um. Von diesem Ringkanal 220 zweigen dann die Ringkanäle 134 ab, die zum Zuführen von Spülluft zu den einzelnen Ringspalten 116 vorgesehen sind.

In der Darstellung der Fig. 14 fallen somit im Bereich des größten Querschnitts des Ringkanals 220 der Ringkanal 134 und der Ringkanal 220 zusammen.

Die anhand der Fig. 3 bis 14 erläuterten Gehäuse 14, 54, 64, 102, 202 der erfindungsgemäßen Bündeldüsen 10, 50, 60 werden jeweils mittels additiver Fertigung hergestellt. Die Gehäuse werden somit schichtweise mittels 3D-Druck oder mittels Laseraufschmelzverfahren ausgebildet. Dadurch können auch die Spülluftkanäle 24 in der in den Fig. 4 bis 7 dargestellten Form und mit dem dargestellten Verlauf sowie auch der Ringkanal 46 während der schichtweisen Herstellung ausgebildet werden. Die Spülluftkanäle 24, der Ringkanal 46 und die Austrittskanäle 18 liegen somit sämtlich in einem Materialblock der Gehäuse. Mittels spanender Fertigung wären die Gehäuse der erfindungsgemäßen Bündeldüsen der Fig. 4 bis 14 nicht herstell bar.

## Patentansprüche

1. Bündeldüse (10, 50, 60, 100) zum Versprühen eines Fluids, mit einem einstückigen Gehäuse (14; 54; 64; 102; 202) und mehreren, um einen zentralen Bereich (20) an einer Vorderseite des Gehäuses (14; 54; 64; 102; 202) angeordneten Austrittsöffnungen (16; 114) für Sprühstrahlen, sowie mit wenigstens einer Spülluftaustrittsöffnung (22; 116) für Spülluft, **dadurch gekennzeichnet, dass** die wenigstens eine Spülluftaustrittsöffnung (22; 116) und zumindest Abschnitte eines Zuführkanals (24; 118) für die Spülluft in dem einstückigen Gehäuse(14; 54; 64; 102; 202) vorgesehen sind.

2. Bündeldüse nach Anspruch 1, **dadurch gekennzeichnet, dass** wenigstens eine der Austrittsöffnungen (114) von einer als Ringspalt ausgebildeten Spülluftaustrittsöffnung (116) umgeben ist.

3. Bündeldüse nach Anspruch 2, **dadurch gekennzeichnet, dass** jede Austrittsöffnung (114) von einer als Ringspalt ausgebildeten Spülluftaustrittsöffnung (116) umgeben ist.

4. Bündeldüse nach wenigstens einem der vorstehenden Ansprüche, **dadurch gekennzeichnet, dass** jeder Spülluftaustrittsöffnung (116) ein separater Zuführkanal (118) für die Spülluft zugeordnet ist.

5. Bündeldüse nach Anspruch 4, **dadurch gekennzeichnet, dass** jeder Zuführkanal (24; 118; 218) zu einer Außenseite des Gehäuses (54;64;102) geführt ist und/oder mit einem Ringkanal (46; 220) im Gehäuse (64; 202) verbunden ist.

6. Bündeldüse nach Anspruch 5, **dadurch gekennzeichnet, dass** eine Kappe (104) vorgesehen ist, die das Gehäuse (102; 202) abschnittsweise umgibt, wobei die Zuführkanäle (118) an der Außenseite des Gehäuses (102; 202) in einem Zwischenraum (120) zwischen der Kappe (104) und dem Gehäuse (102; 202) münden oder der Ringkanal (220) mit einem Zwischenraum (120) zwischen der Kappe (104) und dem Gehäuse (102; 202) in Strömungsverbindung steht.

7. Bündeldüse nach einem der vorstehenden Ansprüche, **dadurch gekennzeichnet, dass** innerhalb des zentralen Bereichs (20) an der Vorderseite des Gehäuses (14; 54; 64) wenigstens eine Spülluftaustrittsöffnung (22) für Spülluft vorgesehen ist.

8. Bündeldüse nach wenigstens einem der vorstehenden Ansprüche, **dadurch gekennzeichnet, dass** die mehreren Austrittsöffnungen (16; 114) ringförmig angeordnet sind.

9. Bündeldüse nach wenigstens einem der vorstehenden Ansprüche, **dadurch gekennzeichnet, dass** in dem zentralen Bereich (20) mehrere Spülluftaustrittsöffnungen (22) angeordnet sind.

10. Bündeldüse nach Anspruch 9, **dadurch gekennzeichnet, dass** die mehreren Spülluftaustrittsöffnungen (22) ringförmig angeordnet sind.

11. Bündeldüse nach wenigstens einem der vorstehenden Ansprüche, **dadurch gekennzeichnet, dass** wenigstens eine Spülluftaustrittsöffnung (72) in einer Seitenfläche oder Umfangsfläche des Gehäuses (64) vorgesehen ist.

12. Bündeldüse nach wenigstens einem der vorstehenden Ansprüche, **dadurch gekennzeichnet, dass** das Gehäuse (14; 54; 64; 102; 202) mittels additiver Fertigung hergestellt ist.

13. Bündeldüse nach wenigstens einem der vorstehenden Ansprüche, **dadurch gekennzeichnet, dass** die Bündeldüse (10; 50; 60; 100) als Zweistoffdüse ausgebildet ist und eine innerhalb des Gehäuses (14; 54; 64; 102; 202) angeordnete Mischkammer (34; 136) aufweist, wobei ein Kanal zum Zuführen von Zerstäubungsgas und ein Kanal zum Zuführen von zu zerstäubendem Fluid in die Mischkammer (34; 136) münden.

14. Anordnung mit Bündeldüse nach wenigstens einem der vorstehenden Ansprüche, **dadurch gekennzeichnet, dass** eine Spülluftversorgung (140) zum Zuführen von Spülluft und zum Einstellen der Menge an zugeführter Spülluft vorgesehen ist, wobei die Spülluftversorgung (140) in Strömungsverbindung mit dem Zuführkanal (122) für Spülluft steht.

15. Verfahren zum Herstellen einer Bündeldüse, **gekennzeichnet durch** schichtweises Aufbauen eines Gehäuses (14; 54; 64; 102; 202) der Bündeldüse (10; 50; 60; 100) mittels additiver Fertigung.
